# FASCICULE DE BREVET EUROPEEN

(11) **EP 2 516 947 B1**
(45) Date de publication et mention de la délivrance du brevet: **13.04.2016**
(21) Numéro de dépôt: 10809281.8
(22) Date de dépôt: 16.12.2010
(51) Int. Cl.: F26B 3/16, F26B 17/14, C10L 5/44, C10L 9/08

(54) **PROCEDE CONTINU DE SECHAGE IRREVERSIBLE DE LA BIOMASSE LIGNOCELLULOSIQUE PAR DEPOLYMERISATION THERMIQUE**
KONTINUIERLICHES VERFAHREN ZUR IRREVERSIBLEN TROCKNUNG VON LIGNOZELLULOSE-BIOMASSE MITTELS THERMISCHER ENTPOLYMERISATION
CONTINUOUS METHOD FOR IRREVERSIBLY DRYING LIGNOCELLULOSIC BIOMASS BY MEANS OF THERMAL DEPOLYMERIZATION

(30) Priorité: 23.12.2009 FR 0959446
(43) Date de publication de la demande: 31.10.2012
(73) Titulaire: Areva Energies Renouvelables, 92400 Courbevoie (FR)
(72) Inventeur: HERY, Jean-Sébastien, F-33200 Bordeaux (FR); MATEOS, David, F-33600 Pessac (FR)
(74) Mandataire: Jacobson, Claude
(86) Numéro de dépôt international: PCT/FR2010/052755
(87) Numéro de publication internationale: WO 2011/086262

(56) Documents cités:
- WO-A1-92/17744
- WO-A1-2008/116993
- WO-A2-2007/000548
- BE-A- 453 678

## Description

L'invention se rattache au secteur technique du traitement de la biomasse dans le cadre des énergies renouvelables en vue de sa valorisation.

En ce début de XXIe siècle, le développement durable semble la seule voie possible pour la conservation de la planète et la réparation des méfaits provoqués par le développement débridé de la seconde moitié du XXe siècle. C'est pour cela que la valorisation énergétique de la biomasse est actuellement largement étudiée, afin de trouver les moyens de remplacer le plus rapidement possible les énergies fossiles par des énergies renouvelables, diminuant ainsi notre dépendance vis-à-vis du charbon et des produits pétroliers, ce qui aura pour conséquence de réduire l'empreinte CO2 lors de la production d'électricité, de ciment, de chaux ou même d'acier et d'élargir la voie vers le développement durable.

Parmi ces solutions, des études ont été développées pour la valorisation énergétique de la biomasse.

WO 92/17744 divulgue le traitement thermique de biomasse dans une tour de fluidisation selon un procédé conforme au de préambule de la revendication 1.

Le Demandeur a lui-même participé à cet effort de recherche et a notamment développé différents procédés pour le recyclage des bois traités, la distillation de produits solides organiques, la fabrication de charbon végétal inorganique à haute teneur en carbone, la fabrication de poudre de carbone. Ces différentes études et développements ont abouti notamment par les brevets FR 2734741, PCT FR 2006/050471, WO 2008/116993, WO 2007/006990.

Ces différents procédés ont fait l'objet d'expérimentation et d'exploitation qui s'avèrent très satisfaisants et répondant à la problématique initiale rappelée ci-avant, en permettant notamment la valorisation de certains solides organiques en vue de la conception de produits notamment de combustion.

Plus particulièrement, dans le brevet PCT WO 20071000548, le procédé de distillation vise la valorisation matière de solides organiques pour la production d'une matière première secondaire à base quasiment exclusivement de carbone, cette matière première n'étant pas destinée à être brûlée. Cette matière première secondaire à base de carbone est destinée à être utilisée pour la réalisation d'autres produits. Cette matière première secondaire est exempte de composants organiques qui ont tous été évacués ainsi que l'eau par effet d'évaporation.On obtient un produit secondaire à base de carbone pouvant être recyclé et utilisé en tant que composant dans la production d'autres produits.

La démarche du Demandeur a été dans le cadre de ses recherches de concevoir et d'obtenir des produits finaux combustibles exempts d'eau mais gardant toute leur matière organique pour améliorer encore la qualité des produits, en s'affranchissant des problèmes de fermentation, d'apparitions de produits de fermentation type champignons, moisissures, et en s'affranchissant également de l'environnement climatique lors du stockage des produits.

C'est pourquoi Thermya a développé et mis au point un procédé pour la production, à partir de biomasse non-comestible, d'un combustible à haut rendement énergétique, stable, sec et hydrophobe, permettant un stockage de longue durée, sans risques de dégradation biologique. D'autre part, ce procédé thermique, facilite le broyage et la compression de la biomasse, tout en augmentant la qualité de sa combustion.

La solution apportée par le Demandeur à travers un nouveau procédé répond à ces objectifs, et les produits obtenus par la mise en oeuvre du procédé selon l'invention apparaissent dans un état de séchage irréversible permettant leur utilisation ensuite dans des conditions optimums de combustion à l'abri de contraintes extérieures.

Le procédé de l'invention est conforme à la revendication 1.

Ces caractéristiques et d'autres encore ressortiront bien de la suite de la description.

Pour fixer l'objet de l'invention, illustrée d'une manière non limitative aux figures des dessins :
La Figure 1 est une vue à caractère schématique illustrant la colonne de séchage irréversible de la biomasse non alimentaire selon le procédé de l'invéntion.
La Figure 2 est une vue à caractère schématique de l'installation mettant en oeuvre le procédé.

Afin de rendre plus concret l'objet de l'invention, on le décrit maintenant d'une manière non limitative illustré aux figures des dessins.

Le Demandeur a développé et mis au point un procédé pour la production à partir de biomasse non alimentaire d'un combustible à haut rendement énergétique stable, sec, et hydrophobe permettant un stockage de longue durée sans risque de dégradation biologique. Le procédé selon l'invention permet d'autre part de faciliter le broyage et la compression de la biomasse tout en augmentant la qualité de sa combustion.

Le procédé de l'invention a pour objet de traiter la biomasse non alimentaire en continu par dépolymérisation thermique selon un séchage entraînant l'irréversibilité de la biomasse dans sa structure en lui donnant les caractéristiques de produits obtenus à l'état sec, hydrophobe, permettant un stockage de longue durée sans risque de dégradation biologique soit par l'environnement naturel, soit par l'apparition de moisissures. En d'autres termes, le procédé selon l'invention entraîne le changement de la structure moléculaire de la biomasse par une évacuation totale de l'eau et un affaiblissement de la structure pariétale par dépolymérisation et légère dévolatilisation. Les produits obtenus sont dans un état irréversible et ne peuvent être modifiés ensuite dans leur structure et composition.

Le procédé de production à partir de biomasse non alimentaire d'un combustible à haut rendement énergétique est remarquable en ce qu'on procède à l'introduction de biomasse dans une colonne de séchage, et déplacement de la biomasse de haut en bas de la colonne en suivant des phases selon trois zones successives de séchage, puis de distillation et puis de dépolymérisation thermique, cette dernière s'effectuant à une température inférieure à 250° C permettant l'élimination de l'eau de la biomasse de façon irréversible et une transformation d'une partie de la matière organique, et en ce que le traitement thermique s'effectue selon un processus continu mettant en oeuvre deux flux circulants à contre-courant dans la colonne de séchage et de dépolymérisation thermique, d'une part, un flux gazeux progressant de bas en haut, d'autre part un flux de matières solides résultaut de la biomasse, qui progresse de haut en bas.

La zone de dépolymérisation thermique se situe en bas de la colonne de séchage ou au niveau supérieur d'une grille inférieure située dans la colonne et agencée pour permettre l'entrée de gaz chauds neutres et d'autre part l'extraction des produits obtenus à l'état solide séché et hydrophobe.

Plus particulièrement, la dépolymérisation thermique permet que chaque particule de biomasse soit intégralement chauffée de sorte qu'elle acquiert une température, uniforme de la surface jusqu'au coeur. Dans l'exemple d'une biomasse lignocellulosique (exemple: bois ...) constitué d'hémicellulose, de cellulose, de lignine, et de matières organiques et minérales (généralement inférieures à 3%). Lors de la dépolymérisation thermique, la structure moléculaire de la biomasse est modifiée ce qui provoque un changement de ses propriétés. La dépolymérisation uniforme de la biomasse libère l'eau et évapore des matières organiques volatiles (COV) par décomposition de l'hémicellulose et des extraits. La température des gaz d'injection correspond à la température finale du traitement thermique de dépolymérisation, qui varie suivant le type de biomasse lignocellulosique à traiter. A cette température, la lignine subit une modification mineure tandis que la cellulose n'est pas attaquée par la chaleur. Comme l'hémicellulose joue un rôle fondamental dans le maintien d'une architecture pariétale organisée en liant les fibrilles de cellulose entre elles, sa dépolymérisation et sa dévolatilisation partielle fragilise l'édifice. De plus, l'hémicellulose étant un polymère amorphe présentant une grande capacité d'absorption d'humidité, sa dégradation permet l'élimination de l'eau et surtout rend le bois hydrophobe. Ainsi, une fois évaporée, l'eau ne peut plus être réabsorbée par le bois.

Ainsi, le procédé selon l'invention permet la conversion rapide et continue de la biomasse non alimentaire à l'état humide, en biomasse sèche, hydrophobe, facilement broyable et densifiable et ne permettant pas la réabsorption d'humidité.

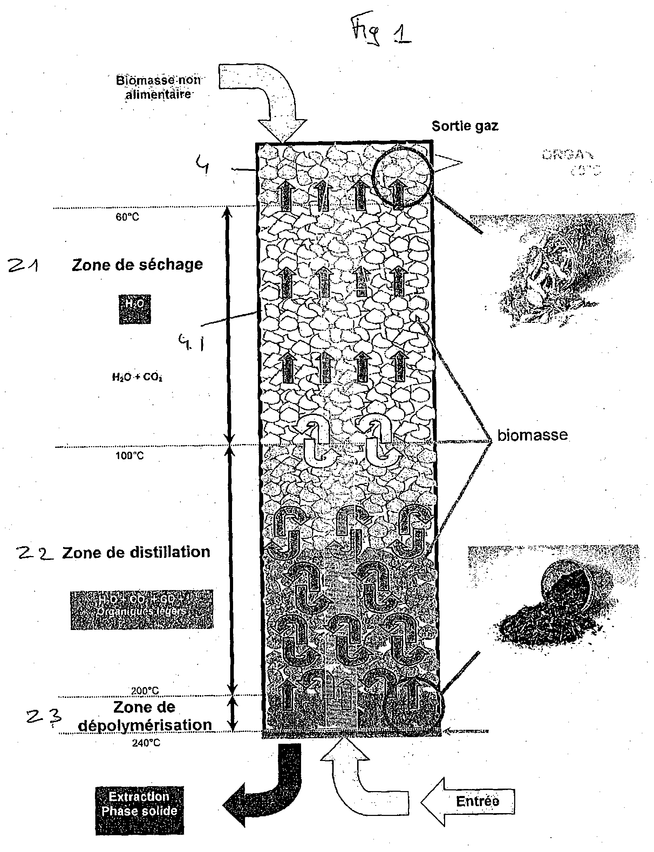

En se référant à la Figure 1, le gradient de température est maintenu dans la colonne remplie de biomasse non alimentaire. Les températures les plus hautes, inférieures à 250° C, se situent en bas de la colonne au niveau de la grille en relation avec la zone de dépolymérisation. Les températures les plus basses, inférieures à 60° C, se situent en haut de la colonne, à la sortie des gaz. Le tiers supérieur de la colonne référencé par 4.1 et correspondant à la zone de séchage est maintenu à des températures de biomasse inférieures à 70° C joue le rôle de filtration des gaz vis-à-vis des premiers organiques volatiles extraits de la biomasse.

La zone 2 relative à la distillation est établie à une température progressive de 100° C à 240° C en permettant l'évacuation d'organiques légers.

La zone 3, inscrite dans la zone 2, est celle relative à la dépolymérisation en bas de colonne entre 200° C et 240° C.

Lorsqu'une particule de biomasse progresse du haut vers le bas de la colonne, elle rencontre progressivement des gaz neutres vis-à-vis de l'oxygène et dont la température est de plus en plus élevée. Sa température augmente de façon homogène de sa surface à son coeur. Lors de la progression vers le bas, la particule de biomasse perd progressivement son eau puis les hémicelluloses subissent une dépolymérisation et une légère dévolatisation entraînant l'expulsion des substances organiques dans le flux gazeux. Cela se poursuit jusqu'à ce que la particule atteigne la grille en bas de colonne.

Les particules extraites de la colonne ont subi un traitement thermique qui a permis leur séchage poussé puis une dépolymérisation et une légère dévolatisation conférant aux particules un comportement hydrophobe et une grande fragilité de la structure pariétale de la biomasse.

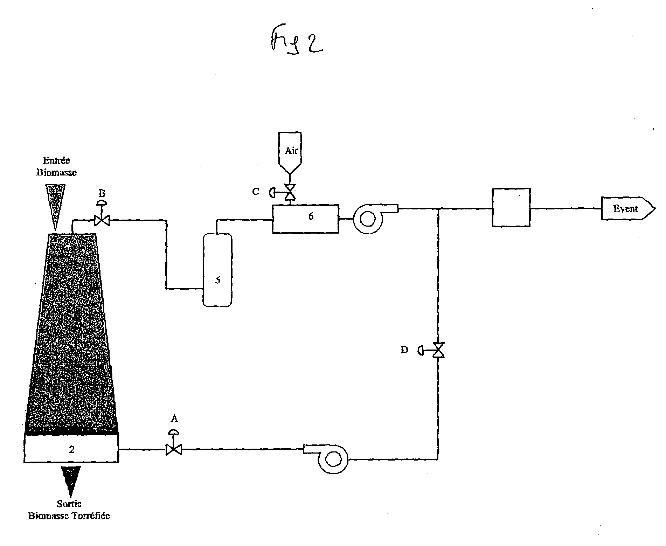

Le flux gazeux en sortie de colonne entre dans le cadre de l'installation illustrée Figure 2 avec une phase de recyclage en circuit fermé. On a représenté Figure 2 la colonne par 4, la chambre d'injection de gaz et de récupération de la biomasse par 2, la grille par 3, les ventilateurs par 1 et 7, le sécheur de gaz par 5, la chambre thermique de combustion par 6, le traitement des gaz de sortie par 8. Des vannes sont identifiées A, B, C, D. Cette installation est de type connu en elle-même.

Les caractéristiques et l'originalité de l'invention se rapporte ainsi aux points suivants et à la combinaison de leurs effets, permettant d'obtenir des produits de combustion à haute performance énergétique et qui ne soient pas soumis aux contraintes extérieures et biologiques en conservant d'une manière irréversible le nouvel état de structure obtenu par le procédé :
- Séchage irréversible (humidité résiduelle < 1%) en continu de la biomasse par un flux de gaz chaud pauvre en oxygène,
- Circulation verticale en continu de deux flux à contre-courant: biomasse vers le bas, gaz chauds vers le haut,
- Chauffage direct de la biomasse par les gaz chauds,
- Uniformité du chauffage de chaque particule tout au long du processus thermique,
- Progressivité de la montée en température des particules au fur et à mesure de la translation des particules vers le bas de la colonne,
- Conservation de la quasi-totalité de l'énergie contenue dans la biomasse originale,
- Traitement thermique doux (inférieur à 250° C) adapté au point de dépolymérisation de chaque type de biomasse ligno-cellulosique,
- Dépolymérisation de la structure pariétale de la biomasse et plus particulièrement de l'hémicellulose,
- Légère dévolatilisation permettant l'extraction des tous premiers organiques de la biomasse par des gaz pauvres en oxygène (<2%),
- Filtration des gaz par la partie supérieure de la colonne qui joue le rôle de filtre,
- La température de chauffage ne dépasse jamais la température finale de dépolymérisation pour chaque type de biomasse.

A titre indicatif, il est donné une information développée après test d'évaluation fait par le Demandeur sur l'élimination de la matière organique selon le procédé de distillation WO 2007/000548 et de la demande.

Dans le premier cas, le rendement massique du procédé est de l'ordre de 30% à partir de bois ayant une humidité proche de 10%. Le produit obtenu est constitué quasiment exclusivement de Carbone. Au cours du procédé la totalité de l'eau et de la partie organique est extraite.

Dans le cadre de la demande (Séchage irréversible), le rendement massique du procédé est de l'ordre de 90% sur base bois sec. Le produit obtenu est un bois sec ayant perdu une faible partie de son organique. Au cours du procédé la totalité de l'eau et une faible proportion d'organique est extraite.

Le procédé selon l'invention trouve de très nombreuses applications et constitue un avancement majeur dans le domaine des énergies renouvelables.

## Revendications

1. Procédé de production à partir de biomasse lignocellulosique non alimentaire d'un combustible, dans lequel on procède à l'introduction de biomasse lignocellulosique non alimentaire dans une colonne de séchage, et au déplacement de la biomasse de haut en bas de la colonne en suivant des phases selon trois zones successives de séchage, puis de distillation et puis de dépolymérisation thermique, permettant la décomposition et la dégradation de l'hémicellulose avec modification de l'architecture pariétale de la biomasse lignocellulosique entraînant la suppression de la capacité d'absorption d'humidité par l'hémicellulose, et entraînant l'élimination de l'eau de la biomasse, et une transformation d'une partie de la matière organique avec l'évaporation des matières organiques volatiles, le traitement thermique mettant en oeuvre deux flux circulants à contre-courant dans la colonne de séchage et de dépolymérisation thermique, d'une part, un flux gazeux progressant de bas en haut, d'autre part un flux de matières solides résultant de la biomasse qui progresse de haut en bas, la zone de dépolymérisation thermique se situant en bas de la colonne de séchage ou au niveau supérieur d'une grille inférieure située dans la colonne, le procédé de dépolymérisation entraînant le changement de la structure moléculaire de la biomasse par une évacuation totale de l'eau, les produits obtenus étant dans un état de structure irréversible, sec et hydrophobe, **caractérisé en ce que** un gradient de température est maintenu dans la colonne remplie de biomasse non alimentaire, **en ce que** les températures les plus hautes, inférieures à 250°C, se situent en bas de la colonne au niveau de la grille en relation avec la zone de dépolymérisation, **en ce que** les températures les plus basses, inférieures à 60°C, se situent en haut de la colonne, à la sortie des gaz, **en ce que** le tiers supérieur de la colonne et correspondant à la zone de séchage est maintenu à des températures de biomasse inférieures à 70°C joue le rôle de filtration des gaz vis-à-vis des premiers organiques volatiles extraits de la biomasse, **en ce que** la zone de distillation est établie à une température progressive de 100°C à 240°C permettant l'évacuation d'organiques légers, **en ce que** la zone de dépolymérisation en bas de colonne est à une température comprise entre 200°C et 240°C, et **en ce que** le traitement thermique s'effectue selon un processus continu.

2. Produit de combustion à haute valeur énergétique obtenu selon le procédé de la revendication 1 et présentant un état de structure irréversible, sec et hydrophobe.

## Patentansprüche

1. Produktionsverfahren eines Brennstoffs aus nicht alimentärer Lignocellulose-Biomasse, wobei bei diesem Verfahren nicht alimentäre Lignocellulose-Biomasse in eine Trocknungssäule eingeleitet wird und die Biomasse die Säule von oben nach unten durchquert und dabei Phasen gemäß dreier aufeinanderfolgender Trocknungszonen durchläuft, gefolgt von Destillation und danach thermischer Depolymerisation, welche die Zersetzung und den Abbau der Hemicellulose mit Änderung der parietalen Architektur der Lignocellulose-Biomasse erlaubt, was zur Unterdrückung der Feuchtigkeitsabsorptionsfähigkeit der Hemicellulose führt, und zur Entfernung des Wassers aus der Biomasse führt, und einer Umwandlung eines Teils der organischen Materie mit Verdampfung der flüchtigen organischen Stoffe, wobei bei der thermischen Behandlung zwei Ströme umgesetzt werden, die gegenläufig in der Trocknungs- und thermischen Depolymerisationssäule zirkulieren, zum einen, ein Gasstrom, der sich von unten nach oben bewegt, zum anderen, ein Strom von fester Materialien, der aus der Biomasse resultiert, der sich von oben nach unten bewegt, wobei sich die Depolymerisationszone unten in der Trocknungssäule befindet oder im oberen Bereich eines unteren Gitters, das sich in der Säule befindet, wobei das Depolymerisationsverfahren die Änderung der Molekularstruktur der Biomasse durch eine vollständige Ausleitung des Wassers bewirkt, wobei die erhaltenen Produkte in einem unumkehrbaren, trockenen und hydrophoben Strukturzustand sind, **dadurch gekennzeichnet, dass** ein Temperaturgradient in der mit nicht alimentärer Biomasse gefüllten Säule aufrechterhalten wird, dass sich die höchsten Temperaturen unter 250 °C unten in der Säule im Bereich des Gitters in Beziehung mit der Depolymerisationszone befinden, dass sich die niedrigsten Temperaturen unter 60 °C oben in der Säule am Gasausgang befinden, dass das obere Drittel der Säule, das der Trocknungszone entspricht, auf Biomasse-Temperaturen unter 70 °C aufrechterhalten wird, die Filtrationsrolle der Gase gegenüber den ersten flüchtigen organischen Extrakten aus der Biomasse spielt, dass die Destillationszone bei einer ansteigenden Temperatur von 100 °C auf 240 °C eingerichtet ist, die die Ableitung leichter organischer Stoffe erlaubt, dass die Depolymerisationszone unten in der Säule eine Temperatur zwischen 200 °C und 240 °C inklusive hat, und dass die thermische Behandlung in einem kontinuierlichen Prozess erfolgt.

2. Verbrennungsprodukt mit hohem energetischem Wert, erhalten gemäß dem Verfahren nach Anspruch 1, mit einem unumkehrbaren, trockenen und hydrophoben Strukturzustand.

## Claims

1. A production method from a non-food lignocellulose biomass of a fuel, wherein it is proceeded with introducing a non-food lignocellulose biomass into a drying column, and with displacing the biomass from top to bottom of the column following phases according to three successive areas for drying and then for distillation and then thermal depolymerization allowing decomposition and degradation of hemicellulose with modification of the wall architecture of the lignocellulose biomass causing suppression of the humidity absorption capability of the hemicellulose, and causing removal of water from the biomass, and transformation of a portion of the organic material with evaporation of the volatile organic materials, the heat treatment applying two flows moving against the current in the drying and thermal depolymerization column, a gas flow advancing from bottom to top on the one hand, a flow of solid materials resulting from the biomass which advances from top to bottom on the other hand, the thermal decomposition area being located at the bottom of the drying column or at the upper level of a lower grid located in the column, the depolarization method causing the change in the molecular structure of the biomass by total removal of the water, the obtained products being in an irreversible, dry and hydrophobic structural state, **characterized in that** a temperature gradient is maintained in the column filled with non-food biomass, **in that** the highest temperatures, of less than 250°C, are located at the bottom of the column at the grid in connection with the depolymerization area, **in that** the lowest temperatures, of less than 60°C, are located at the top of the column, at the gas outlet, **in that** the upper third of the column and corresponding to the drying area is maintained at biomass temperatures of less than 70°C, plays the role of filtration of the gases towards the first organic volatile substances extracted from the biomass, **in that** the distillation area is established at a gradual temperature from 100°C to 240°C allowing the removal of the lightweight organics, **in that** the depolymerization area at the bottom of the column is at a temperature comprised between 200°C and 240°C, and **in that** the heat treatment is carried out according to a continuous process.

2. A combustion product with a high energy value obtained according to the method of claim 1 and having an irreversible, dry and hydrophobic structural state.
